# EUROPEAN PATENT SPECIFICATION

(11) **EP 1 382 286 B1**
(45) Date of publication and mention of the grant of the patent: **27.05.2009**
(21) Application number: 03077142.2
(22) Date of filing: 07.07.2003
(51) Int. Cl.: A47L 9/24, F16L 11/18

(54) **Articulated joint for an electric household appliance and electric household appliance comprising said joint**
Gelenkverbindung für ein elektrisches Haushaltsgerät und elektrisches Haushaltsgerät mit einer solchen Verbindung
Joint articulé pour un appareil électroménager et appareil électroménager muni d'un tel joint

(30) Priority: 16.07.2002 IT MI20021567
(43) Date of publication of application: 21.01.2004
(73) Proprietor: New Ermes Europe S.p.A., 21041 Albizzate (Varese) (IT)
(72) Inventor: Roschi, Riccardo, 21100 Varese (IT)
(74) Representative: Marchi, Massimo

(56) References cited:
- EP-A- 1 031 312
- EP-A- 1 310 202
- WO-A-00/65978
- WO-A-01/97673
- DE-A- 4 413 071
- DE-U- 8 436 154
- FR-A- 578 037
- FR-A- 1 140 810

## Description

The present invention relates to an articulated joint for an electric household appliance and an electric household appliance comprising said joint.

A joint according to the preamble of claim 1 is already known e.g. from WO-A-0065978.

More particularly, the present invention relates to a joint for an electric household appliance intended to suck up dust and rubbish.

As is known, an electric household appliance of the said type comprises an accessory for cleaning such as, for example, a suction nozzle or a suction brush.

Said electric household appliance, for example a vacuum cleaner or an electric brush, makes use of a suction tube having a first end associated with said suction accessory and a second end communicating with a container for collecting the dust and rubbish sucked up by said suction accessory.

Usually, a section of said suction tube, if necessary provided with a suitable grip, is manoeuvred by the operator so as to direct the suction accessory on the surface to be cleaned.

In the conventional art, this suction tube section is formed by a long rigid tubing connected, at its far end, to said suction accessory.

Said tube section, which may be provided with a suitable grip and is manoeuvred by the operator so as to direct the suction accessory on the surface to be cleaned, is also called "steering means".

Conventional steering means have the drawback that said long rigid tubing obliges the operator to bend down whenever the surface to be cleaned is situated underneath a piece of furniture such as, for example, a bed, a table and the like.

Moreover, sometimes, this operation is also hindered by the fact that the space surrounding said furniture is restricted and does not allow said steering means to be introduced easily underneath the furniture.

The present invention aims to overcome the abovementioned drawbacks.

According to a first aspect thereof, the present invention therefore concerns, by way of steering means, an articulated joint for tubes of electric household appliances, comprising a plurality of axially hollow modular elements, each modular element comprising a male end and a female end, coupling means for joining said modular elements to each other, resilient means fitted to at least two adjacent modular elements, said resilient means being deformable resiliently under the action of a force with simultaneous rotation of a modular element with respect to an adjacent modular element and consequent variation in the configuration from straight to curved and resilient return into the straight configuration when said force ceases to act.

Typically, said axially hollow tubes are made of rigid material. Preferably, said coupling means retain the male end of a first modular element inside the female end of a second modular element.

Conveniently, said coupling means connect a male end of the first modular element having the form of a substantially spherical head inside the female end of the second modular element.

According to a preferred embodiment, said coupling means comprise a first and a second annular unit, said first annular unit being able to be associated with the male end of the first modular element and said second annular unit being able to be inserted with pressure inside the female end of the second modular element, said first annular unit interfering with said second annular unit so as to retain said two modular elements together.

Typically, said first annular unit comprises two semi-annular bands.

Preferably, said second annular unit comprises a first annular band followed by a portion with a narrower cross-section forming a step and by a second annular band having a smaller diameter than the first band, said second annular unit being able to be inserted with pressure inside said female end of the modular element.

Conveniently, said second annular unit which can be inserted with pressure inside said female end of the modular element is inserted until said second annular band is brought into contact against a suitable shoulder of the modular element.

Preferably, each modular element comprises a substantially spherical head provided with a pair of lateral pins emerging so as to project outwards in opposite directions and each semi-annular band comprises a groove for each receiving one of said pins, each pin having a height not greater than the thickness of said groove.

Advantageously, said groove has a substantially semi-circular shape and houses one of said pins with a small amount of play so as to allow rotation of each element with respect to at least one other element only in a substantially common plane.

However, by providing said grooves with a shape extending longitudinally along a part of the peripheral portion of said semi-annular bands, said pins will be allowed to rotate also with respect to said first annular unit.

Typically, said resilient means are aligned with each other.

Advantageously, said resilient means comprise metal springs, each spring having a first end constrained to a first modular element and a second end constrained to an adjacent modular element. Alternatively, said resilient means consist of a single spring which extends along all the elements of the articulated joint and is constrained to at least two elements of said joint, preferably, to at least the two terminal elements.

As an alternative to the metal springs, the resilient means may be formed by other resiliently deformable bodies made of metal, rubber or other suitable materials.

In another embodiment, said resilient means are associated with the elements of the articulated joint during the process for moulding of the latter.

Conveniently, said modular elements comprise means for housing the resilient means.

Advantageously, said housing means comprise in a modular element a single casing formed by two shells having a first closed end and a second open end, each resilient means being inserted in the open end of two shells of two adjacent modular elements.

Conveniently the two terminal elements of said joint are provided at their ends with two hollow cylindrical portions which can be associated with two tubes, a first tube being able to be connected to a suction accessory such as, for example, a nozzle or a brush of said electric household appliance and a second tube being able to be connected to a container for collecting the dust and rubbish sucked up by said accessory of said electric household appliance.

Advantageously, said second tube is provided with a suitable grip.

According to a second aspect thereof, the present invention relates to an electric household appliance comprising an articulated joint according to the present invention.

The present invention will now be further illustrated with the aid of the description which follows and the accompanying figures which are provided solely by way of example and without intended to be limiting, in which:
Fig. 1 shows a front view of an articulated joint according to the invention;
Fig. 2 shows an exploded perspective front view of a modular element according to Fig. 1;
Fig. 3 shows a front perspective view of the element according to Fig. 2, prior to assembly with another element of the joint;
Fig. 4 shows a perspective view of an assembly step following that shown in Fig. 3;
Fig. 5 shows a further perspective view of a step for assembly of the joint, following that shown in Fig. 4;
Fig. 6 shows a constructional detail prior to insertion into an element of the joint.

The electric household appliance to which reference will be made by way of a non-limiting example is a vacuum cleaner.

This electric household appliance comprises, at a first end "a" of an articulated joint 1 of the invention, a tube 1 which is internally hollow and associated with a suction tube 3 provided with an end suction nozzle 3'.

The second end "b" of the articulated joint 1 of the invention is associated with an internally hollow tube 4 which has, connected to it, a hollow connection piece 5 or other connection means with an equivalent hollow shape, communicating with a box-shaped body 5' of the electric household appliance.

This box-shaped body 5' comprises inside it (in a manner known per and therefore not illustrated) both a container (associated with the connection piece 5) such as, for example, a bag for collecting dust and rubbish and, optionally, a suction motor.

The box-shaped body 5' also has, integral with it, a grip (not shown) used by the operator in order to manoeuvre said joint 1 and, by means of it, said suction nozzle 3'.

The articulated joint 1 comprises a plurality of modular elements 6 which are internally hollow and arranged in succession: said two tubes 2,4 are connected to two terminal elements 7,8 of the articulated joint 1.

The articulated joint 1 also comprises coupling means and resilient means associated, as explained further below, with adjacent modular elements.

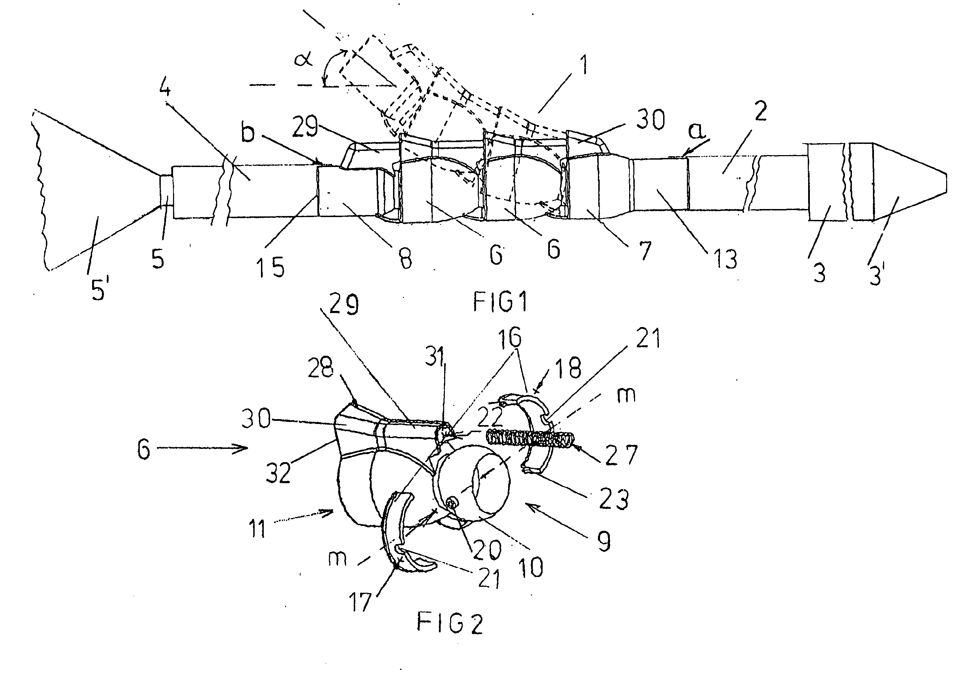

In the embodiment shown in Figs. 1-6, said coupling means have only one degree of freedom and are able to allow rotation of a modular element with respect to an adjacent modular element, in a substantially common plane which coincides with the plane of the sheet.

This rotation of each modular element 6 allows the articulated joint 1 to assume different curved configurations depending on the force applied to the "steering means" by the person operating the electric household appliance. By way of example, Fig. 1 shows an angle of inclination α of the articulated joint 1 in a configuration which is curved with respect to the straight configuration.

Advantageously, this angle of inclination α varies between 1° and 90°, and preferably between 20° and 70°.

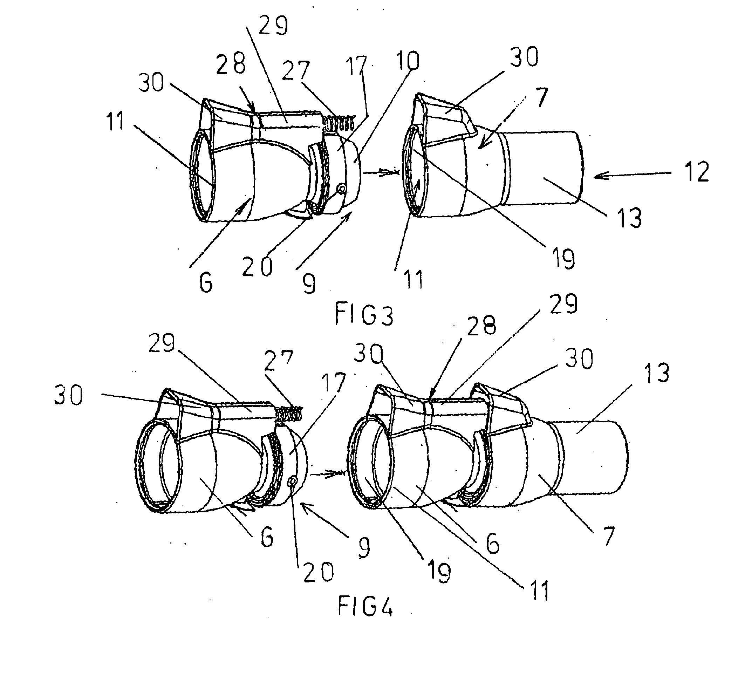

More particularly, these coupling elements comprise in each modular element 6 (Fig. 2) a male end 9, having the form of a spherical head 10, and a female end 11, intended to receive or retain the male end 9 of an adjacent modular element 6 (Fig. 4).

The coupling means of the end terminal element 7 comprise (Fig. 3) a female end 11 intended to receive and retain by means of interference the male end 9 of the adjacent modular element 6.

Moreover, the terminal end 7 comprises an end 12 in the form of a cylindrical sleeve 13 which can be associated with the tube 2.

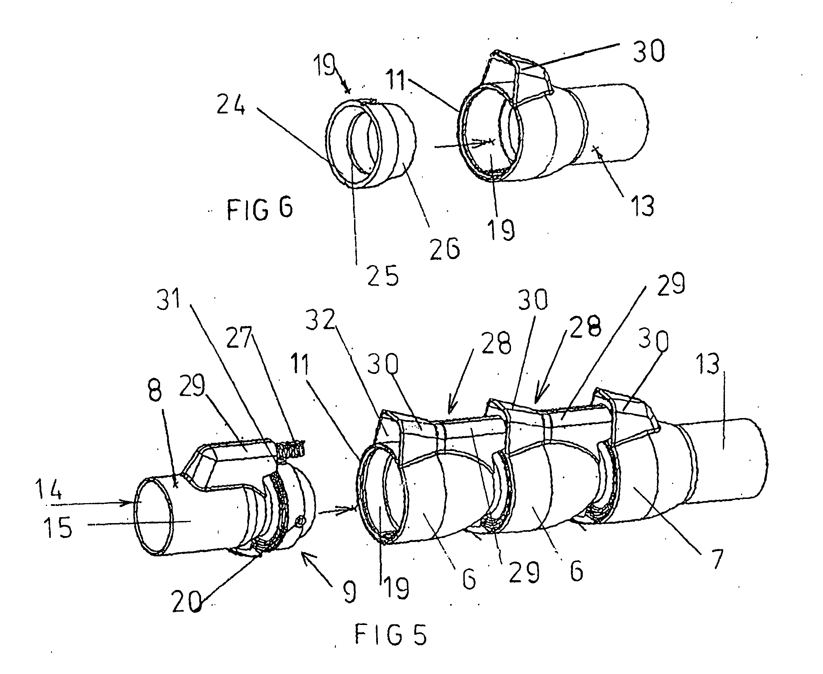

In turn the coupling means of the terminal element 8 comprise (Fig. 5) a male element 9 which can be inserted in the female end 11 of the adjacent modular element 6.

Moreover, the terminal element 8 comprises an end 14 in the form of a cylindrical sleeve 15 which can be associated with the tube 4.

The preferred embodiment of the coupling means envisages the association of the male end 9 and female end 11 with special annular units.

More precisely, said coupling means comprise a first annular unit 16 (Fig. 2) formed by two semi-annular bands 17,18 which can be associated with the spherical head 10 of the male end 9.

Moreover, said coupling means comprise a second annular unit 19 which can be inserted with pressure inside the female end 11 in the direction of the arrow shown in Fig. 6.

Said spherical head 10 also comprises two pins 20 (only one of which is shown in Fig. 2) emerging so as to project laterally outwards and said semi-annular bands 17,18 comprise two grooves 21 which are open on the axially external side.

These grooves 21 have a substantially semi-circular shape and receive the pins 20 with a small degree of play. The axes of the two pins 20 are arranged along a straight line m-m (Fig. 2). The height of the pins 20 is not greater than the thickness of the grooves 21.

With this configuration of the grooves 21, the coupling means have substantially only one degree of freedom and allow each element (6) to rotate only in a substantially common plane.

By providing said grooves 21 with a shape extending longitudinally along a part of the peripheral portion of said semi-annular bands 17,18, said pins 20 will be allowed to rotate also with respect to said first annular unit 16.

During assembly, the semi-annular bands 17,18 are associated with the spherical head 10 of the male end 9 and the pins 20 of the head 10 are inserted inside the grooves 21 of these semi-annular bands 17,18.

Locking of the two semi-annular bands 17,18 on the head 10 is performed by means of special constraining devices of the interlocking type. For this purpose the band 18 comprises a tooth 22 and a slit 23 which are intended to be constrained, respectively, with a corresponding slit and a corresponding tooth (not shown) of the band 17.

The coupling means also comprise said second annular unit 19 formed (Fig. 6) by a first annular band 24 followed by a portion with a narrower cross-section forming a step 25 and by a successive second annular band 26 having a diameter smaller than the first band.

During assembly, the second annular unit 19 is inserted with pressure (Fig. 6) inside said female end 11 until the second band 26 comes up against a special shoulder (not shown).

The articulated joint 1 further comprises resilient means formed by aligned metal springs 27. In Fig. 5 these springs 27 are aligned along the upper portions of the modular elements; each spring 27 has a first end constrained to a modular element 6 or, respectively, to a terminal element 7,8 and a second end constrained to an adjacent modular element 6.

In particular, each spring 27 is housed inside special housing means, said housing means being provided in each modular element 6 in the form of a casing 28 (Fig. 2) comprising two shells 29, 30.

The terminal element 7 has only one shell 29, while the terminal element 8 has only one shell 30.

These shells 29, 30 have a first closed end and a second open end.

The open end 31 of the shell 29 lies substantially in the plane perpendicular to the start of the spherical head 10 and the open end 32 of the shell 30 lies in the same plane as the female end 11.

Each spring 27 may be housed (Fig. 3-5) inside the shell 29 of a first modular element 6 or, at the end b of the joint 1, of the terminal element 8, and inside the shell 30 of a second adjacent modular element 6 or, at the end a of the joint 1, of the terminal element 7.

During assembly of the articulated joint 1, it is envisaged assembling together the male end of a modular element 6 or, at the end b of the joint 1, the male end of the terminal element 8, and the female end of the adjacent modular element 6 or, at the end a of the joint 1, the female end of the terminal element 7 (Fig. 4).

This step is performed by inserting with pressure the spherical head 10 - already associated with the semi-annular bands 17,18 - of the modular element 6 or, at the end b of the joint 1, of the terminal element 8, inside the annular unit 19 already mounted in the adjacent modular element 6 or, at the end a of the joint 1, in the terminal element 7.

The male end 9 penetrates inside the first annular band 24 as far as the zone of the pins 20.

The spherical head 10 is thus able to rotate about the hinge formed by the pins 20 since the height of the pins, being less than the thickness of the grooves 21, does not touch the walls of the first annular band 24.

Moreover, during insertion of the male end 9 inside the female end 11, the pairs of shells 29,30 of two adjacent elements are brought closer together with consequent initial prestressing of the spring 27 arranged between them.

For this purpose, as illustrated in the figures, the open end 32 of the shell 30 has a greater width than the open end 31 of the shell 29; therefore a portion of the shell 29 penetrates inside the shell 30, achieving the desired prestressing of the spring 27.

The same steps are repeated in a similar manner for joining together all the modular elements 6 of the joint 1.

During assembly it is envisaged associating the terminal elements 7,8 with the adjacent modular elements 6 by assembling a male end and a female end as already described.

The articulated joint 1 thus constructed is associated with the tubes 2,4 by means of the sleeves 13,15 of the terminal elements 7,8 (Fig. 1).

Advantageously, the operator during operation of the electric household appliance may perform the various cleaning operations while keeping the bust of the body in a substantially erect position.

In fact, the articulated joint 1 is able to assume the most appropriate angles of curvature necessary for introducing the suction nozzle 3' into spaces which are difficult to access such as, for example, underneath a bed or a table, without the operator having to bend down.

Advantageously, during the various operations performed by means of the electric household appliance, the articulated joint 1 retains a controllable structure, despite the presence of a plurality of movable elements 6,7,8.

In fact, the resilient deformation imparted to the springs 27 between adjacent elements allows the articulated joint 1 according to the invention to assume and maintain, when a force is applied by the operator, a stable curved configuration in a similar manner to what would occur when a single elastic cord is subjected to a bending moment .

Essentially, the springs 27 prevent a modular element from being subjected to a movement which is not co-ordinated with respect to that of the other modular elements during operation of the electric household appliance.

Moreover, again advantageously, when force is no longer exerted on the articulated joint 1, it assumes the initial straight configuration.

## Claims

1. Articulated joint (1) for tubes of electric household appliances, comprising a plurality of axially hollow modular elements (6), each modular element (6) comprising a male end (9) and a female end (11), coupling means (16,19) for joining said modular elements (6) to each other, **characterized by** resilient means (27) fitted to at least two adjacent modular elements (6), said resilient means (27) being deformable resiliently under the action of a force with simultaneous rotation of a modular element (6) with respect to an adjacent modular element (6) and consequent variation in the configuration of said joint (1) from straight to curved and resilient return into the straight configuration when said force ceases to act.

2. Joint (1) according to Claim 1, in which said coupling means (16,19) retain the male end (9) of a first modular element (6) inside the female end (11) of a second modular element (6).

3. Joint (1) according to Claim 1 or 2, in which said coupling means (16,19) connect a male end (9) of said first modular element (6) having a substantially spherical head (10) inside the female end (11) of said second modular element (6).

4. Joint (1) according to one of the preceding claims from 1 to 3, in which said coupling means comprise a first and a second annular unit (16,19), said first annular unit (16) being able to be associated with the male end (9) of said first modular element (6) and said second annular unit (19) being able to be inserted with pressure inside the female end (11) of said second modular element (6), said first annular unit (16) interfering with said second annular unit (19) so as to retain said two modular elements (6) together.

5. Joint (1) according to Claim 4, in which said first annular unit (16) comprises two semi-annular bands (17,18).

6. Joint (1) according to Claim 4, in which said second annular unit (19) comprises a first annular band (24) followed by a portion with a narrower cross-section forming a step (25) and by a second annular band (26) having a smaller diameter than the first band (24), said second annular unit (19) being able to be inserted with pressure inside said female end (11) of the modular element (6).

7. Joint (1) according to Claim 6, in which said second annular unit (19) which can be inserted with pressure inside said female end (11) of the modular element (6) is inserted until said annular band (26) is brought into contact against a suitable shoulder of the modular element (6).

8. Joint (1) according to Claim 5, in which each modular element (6) comprises a substantially spherical head (10) provided with a pair of lateral pins (20) emerging so as to project outwards in opposite directions and each semi-annular band (17,18) comprises a groove (21) for each receiving one of said pins (20), each pin (20) having a height not greater than the thickness of said groove (21).

9. Joint (1) according to Claim 8, in which said groove (21) has a substantially semi-circular shape and houses one of said pins (21) with a small amount of play so as to allow rotation of each element (6) with respect to at least one other element (6) only in a substantially common plane.

10. Joint (1) according to Claim 8, in which said groove (21) extends longitudinally along a part of the peripheral portion of said semi-annular bands 17,18), thus allowing said pins (20) to rotate also with respect to said first annular unit (16).

11. Joint (1) according to Claim 1, in which said resilient means (27) are aligned with each other.

12. Joint (1) according to Claim 11, in which said resilient means (27) comprise metal springs (27), each spring having a first end constrained to a first modular element (6) and a second end constrained to an adjacent modular element (6).

13. Joint (1) according to Claim 11 or 12, in which said modular elements (6) comprise means (29,30) for housing the resilient means (27).

14. Joint (1) according to Claim 13, in which said housing means (29,30) comprise in a modular element (6) a single casing (28) formed by two shells (29,30) having a first closed end and a second open end (31,32), each resilient means (27) being inserted into said second open end (31,32) of the two shells (29,30) of two adjacent modular elements (6).

15. Joint (1) according to any one of Claims 1 to 14, in which two terminal elements (7,8) of said joint (1) are provided at their ends (12,14) with two cylindrical portions (13,15) which can be associated with two tubes (2,4), a first tube (2) being able to be connected to a suction tube (3) connected to a suction accessory (3') of said electric household appliance and a second tube (4) being able to be connected to said electric household appliance and also being integral with steering means.

16. Joint (1) according to any one of Claims 11 to 15, in which said resilient means (27) are associated with the elements (6,7,8) of the articulated joint (1) during the process for moulding of the latter (6,7,8).

17. Joint (1) according to Claim 15, in which the resilient means (27) comprise a single spring which extends along all the elements (6,7,8) of the joint (1) and is constrained to at least two elements (6,7,8) of said joint (1).

18. Electric household appliance comprising, between two tubes (2,4), an articulated joint (1) according to any one of Claims 1 to 17.

19. Electric household appliance according to claim 18, **characterized in that** it is a vacuum cleaner.

20. Electric household appliance according to claim 18, **characterized in that** it is an electric brush.

## Patentansprüche

1. Gelenkverbindung (1) für Rohre von elektrischen Haushaltsgeräten, mit einer Mehrzahl von axial hohlen Modulelementen (6), wobei jedes Modulelement (6) ein männliches Ende (9) und ein weibliches Ende (11) aufweist, sowie Kupplungsmitteln (16, 19) zum miteinander Verbinden der Modulelemente (6),
**dadurch gekennzeichnet,**
**dass** elastische Mittel (27) an zumindest zwei benachbarten Modulelementen (6) angebracht sind, wobei die elastischen Mittel (27) unter der Wirkung einer Kraft bei gleichzeitiger Drehung eines Modulelementes (6) in Bezug auf ein benachbartes Modulelement (6) und nachfolgender Änderung der Anordnung der Verbindung (1) von gerade zu gekrümmt elastisch verformbar sind und elastisch in die gerade Anordnung zurückkehren, wenn die Kraft aufhört zu wirken.

2. Verbindung (1) nach Anspruch 1, bei der die Kupplungsmittel (16, 19) das männliche Ende (9) eines ersten Modulelementes (6) innerhalb des weiblichen Endes (11) eines zweiten Modulelementes (6) halten.

3. Verbindung (1) nach Anspruch 1 oder 2, bei der die Kupplungsmittel (16, 19) ein männliches Ende (9) des ersten Modulelementes (6) mit einem im Wesentlichen kugelförmigen Kopf (10) innerhalb des weiblichen Endes (11) des zweiten Modulelementes (6) verbinden.

4. Verbindung (1) nach einem der vorstehenden Ansprüche 1 bis 3, bei der die Kupplungsmittel eine erste und eine zweite ringförmige Einheit (16, 19) aufweisen, wobei die erste ringförmige Einheit (16) mit dem männlichen Ende (9) des ersten Modulelementes (6) verbunden werden kann, und die zweite ringförmige Einheit (19) unter Druck in das weibliche Ende (11) des zweiten Modulelementes (6) eingesetzt werden kann, und die erste ringförmige Einheit (16) in die zweite ringförmige Einheit (19) eingreift, um die zwei Modulelemente (6) zusammenzuhalten.

5. Verbindung (1) nach Anspruch 4, bei der die erste ringförmige Einheit (16) zwei halbringförmige Bereiche (17, 18) aufweist.

6. Verbindung (1) nach Anspruch 4, bei der die zweite ringförmige Einheit (19) einen ersten ringförmigen Bereich (24) aufweist, gefolgt von einem Abschnitt mit einem engeren Querschnitt, der eine Stufe (25) bildet, und von einem zweiten ringförmigen Bereich (26) mit einem kleineren Durchmesser als der erste Bereich (24), wobei die zweite ringförmige Einheit (19) unter Druck in das weibliche Ende (11) des Modulelementes (6) eingesetzt werden kann.

7. Verbindung (1) nach Anspruch 6, bei der die zweite ringförmige Einheit (19), die unter Druck in das weibliche Ende (11) des Modulelementes (6) eingesetzt werden kann, eingesetzt ist, bis der ringförmige Bereich (26) gegen eine geeignete Schulter des Modulelementes (6) in Kontakt gebracht ist.

8. Verbindung (1) nach Anspruch 5, bei der jedes Modulelement (6) einen im Wesentlichen kugelförmigen Kopf (10) aufweist, der mit einem Paar seitlicher Stifte (20) versehen ist, die so hervortreten, um in gegenüberliegenden Richtungen nach außen vorzustehen, und jeder halbringförmige Bereich (17, 18) eine Rille (21) aufweist, um jeweils einen der Stifte (20) aufzunehmen, und jeder Stift (20) eine Höhe aufweist, die nicht größer ist als die Dicke der Rille (21).

9. Verbindung (1) nach Anspruch 8, bei der die Rille (21) eine im Wesentlichen halbkreisförmige Form aufweist und einen der Stifte (21) mit einem geringen Spiel beherbergt, um jedem Element (6) in Bezug auf zumindest ein anderes Element (6) eine Drehung lediglich in einer im Wesentlichen gemeinsamen Ebene zu ermöglichen.

10. Verbindung (1) nach Anspruch 8, bei der sich die Rille (21) längs entlang eines Teils des umgebenden Abschnitts des halbringförmigen Bereichs (17, 18) erstreckt, um so den Stiften (20) zu ermöglichen, auch in Bezug auf die erste ringförmige Einheit (16) zu rotieren.

11. Verbindung (1) nach Anspruch 1, bei der die elastischen Mittel (27) miteinander ausgerichtet sind.

12. Verbindung (1) nach Anspruch 11, bei der die elastischen Mittel (27) Metalltedern (27) aufweisen, und jede Feder ein erstes Ende, das an ein erstes Modulelement (6) gebunden ist, und ein zweites Ende, das an ein benachbartes Modulelement (6) gebunden ist, aufweist.

13. Verbindung (1) nach Anspruch 11 oder 12, bei der die Modulelemente (6) Mittel (29, 30) aufweisen, um die elastischen Mittel (27) zu beherbergen.

14. Verbindung (1) nach Anspruch 13, bei der die Gehäusemittel (29, 30) in einem Modulelement (6) ein einzelnes Gehäuse (28) aufweisen, das durch zwei Schalen (29, 30) mit einem ersten geschlossenen Ende und einem zweiten offenen Ende (31, 32) gebildet ist, wobei jedes elastische Mittel (27) in das zweite offene Ende (31, 32) der zwei Schalen (29, 30) der zwei benachbarten Modulelemente (6) eingesetzt ist.

15. Verbindung (1) nach einem der Ansprüche 1 bis 14, bei der zwei endständige Elemente (7, 8) der Verbindung (1) an ihren Enden (12, 14) mit zwei zylindrischen Abschnitten (13,15) versehen sind, die mit zwei Röhren (2, 4) verbunden werden können, einer ersten Röhre (2), die mit einer Saugröhre (3) verbunden werden kann, die mit einem Saugzubehörteil (3') des elektrischen Haushaltsgerätes verbunden ist, und einer zweiten Röhre (4), die mit dem elektrischen Haushaltsgerät verbunden werden kann und auch mit Führungsmitteln integral ist.

16. Verbindung (1) nach einem der Ansprüche 11 bis 15, bei der die elastischen Mittel (27) mit den Elementen (6, 7, 8) der Gelenkverbindung (1) während des Verfahrens der Formgebung der letzteren (6, 7, 8) verbunden sind.

17. Verbindung (1) nach Anspruch 15, bei der die elastischen Mittel (27) eine einzelne Feder aufweisen, die sich entlang sämtlicher Elemente (6, 7, 8) der Verbindung (1) erstreckt und an zumindest zwei Elemente (6, 7, 8) der Verbindung (1) angebunden ist.

18. Elektrisches Haushaltsgerät mit einer Gelenkverbindung (1) zwischen zwei Röhren (2, 4) nach einem der Ansprüche 1 bis 17.

19. Elektrisches Haushaltsgerät nach Anspruch 18,
**dadurch gekennzeichnet,**
**dass** es ein Staubsauber ist.

20. Elektrisches Haushaltsgerät nach Anspruch 18,
**dadurch gekennzeichnet,**
**dass** es eine elektrische Bürste ist.

## Revendications

1. Raccord articulé (1) pour des tubes d'appareils électroménagers, comprenant une pluralité d'éléments modulaires (6) axialement creux, chaque élément modulaire (6) comprenant une extrémité mâle (9) et une extrémité femelle (11), des moyens d'accouplement (16, 19) pour joindre lesdits éléments modulaires (6) les uns aux autres, **caractérisé par** des moyens élastiques (27) montés sur au moins deux éléments modulaires (6) adjacents, lesdits moyens élastiques (27) étant déformables élastiquement sous l'action d'une force avec une rotation simultanée d'un élément modulaire (6) par rapport à un élément modulaire (6) adjacent et une variation résultante de la configuration dudit raccord (1) de droite à incurvée et un retour élastique dans la configuration droite lorsque ladite force cesse d'agir.

2. Raccord (1) selon la revendication 1, dans lequel lesdits moyens d'accouplement (16, 19) retiennent l'extrémité mâle (9) d'un premier élément modulaire (6) à l'intérieur de l'extrémité femelle (11) d'un deuxième élément modulaire (6).

3. Raccord (1) selon la revendication 1 ou 2, dans lequel lesdits moyens d'accouplement (16, 19) relient une extrémité mâle (9) dudit premier élément modulaire (6) comportant une tête (10) sensiblement sphérique à l'intérieur de l'extrémité femelle (11) dudit deuxième élément modulaire (6).

4. Raccord (1) selon l'une des revendications 1 à 3 précédentes, dans lequel lesdits moyens d'accouplement comprennent des première et deuxième unités annulaires (16, 19), ladite première unité annulaire (16) pouvant être associée à l'extrémité mâle (9) dudit premier élément modulaire (6) et ladite deuxième unité annulaire (19) pouvant être insérée par pression à l'intérieur de l'extrémité femelle (11) dudit deuxième élément modulaire (6), ladite première unité annulaire (16) interférant avec ladite deuxième unité annulaire (19) de manière à retenir lesdits deux éléments modulaires (6) ensemble.

5. Raccord (1) selon la revendication 4, dans lequel ladite première unité annulaire (16) comprend deux bandes semi-annulaires (17, 18).

6. Raccord (1) selon la revendication 4, dans lequel ladite deuxième unité annulaire (19) comprend une première bande annulaire (24) suivie d'une partie avec une section transversal plus étroite formant un gradin (25) et d'une deuxième bande annulaire (26) ayant un plus petit diamètre que la première bande (24), ladite deuxième unité annulaire (19) pouvant être insérée par pression à l'intérieur de ladite extrémité femelle (11) de l'élément modulaire (6).

7. Raccord (1) selon la revendication 6, dans lequel ladite deuxième unité annulaire (19) qui peut être insérée par pression à l'intérieur de ladite extrémité femelle (11) de l'élément modulaire (6) est insérée jusqu'à ce que ladite bande annulaire (26) soit amenée en contact avec un épaulement approprié de l'élément modulaire (6).

8. Raccord (1) selon la revendication 5, dans lequel chaque élément modulaire (6) comprend une tête (10) sensiblement sphérique pourvue d'une paire de broches latérales (20) émergeant de manière à faire saillie à l'extérieur dans des directions opposées, et chaque bande semi-annulaire (17, 18) comprend une rainure (21) pour recevoir chacune une desdites broches (20), chaque broche (20) ayant une hauteur qui n'est pas supérieure à l'épaisseur de ladite rainure (21).

9. Raccord (1) selon la revendication 8, dans lequel ladite rainure (21) a une forme sensiblement semi-circulaire et loge une desdites broches (21) avec une petite quantité de jeu de manière à permettre une rotation de chaque élément (6) par rapport à au moins un autre élément (6) uniquement dans un plan sensiblement commun.

10. Raccord (1) selon la revendication 8, dans lequel ladite rainure (21) s'étend longitudinalement le long d'une partie de la partie périphérique desdites bandes semi-annulaires (17, 18), permettant ainsi auxdites broches (20) de tourner également par rapport à ladite première unité annulaire (16).

11. Raccord (1) selon la revendication 1, dans lequel lesdits moyens élastiques (27) sont alignés les uns avec les autres.

12. Raccord (1) selon la revendication 11, dans lequel lesdits moyens élastiques (27) comprennent des ressorts (27) métalliques, chaque ressort ayant une première extrémité contrainte par à un premier élément modulaire (6) et une deuxième extrémité contrainte par un élément modulaire (6) adjacent.

13. Raccord (1) selon la revendication 11 ou 12, dans lequel lesdits éléments modulaires (6) comprennent des moyens (29, 30) pour loger les éléments élastiques (27).

14. Raccord (1) selon la revendication 13, dans lequel lesdits moyens de logement (29, 30) comprennent, dans un élément modulaire (6), une enveloppe (28) unique formée par deux coques (29, 30) ayant une première extrémité fermée et une deuxième extrémité ouverte (31, 32), chaque moyen élastique (27) étant inséré dans ladite deuxième extrémité ouverte (31, 32) des deux coques (29, 30) de deux éléments modulaires (6) adjacents.

15. Raccord (1) selon l'une quelconque des revendications 1 à 14, dans lequel deux éléments terminaux (7, 8) dudit raccord (1) sont pourvus, à leurs extrémités (12, 14), de deux parties cylindriques (13, 15) qui peuvent être associées à deux tubes (2, 4), un premier tube (2) pouvant être relié à un tube d'aspiration (3) relié à un accessoire d'aspiration (3') dudit appareil électroménager et un deuxième tube (4) pouvant être relié audit appareil électroménager et étant également d'un seul tenant avec des moyens de direction.

16. Raccord (1) selon l'une quelconque des revendications 11 à 15, dans lequel lesdits moyens élastiques (27) sont associés aux éléments (6, 7, 8) du raccord articulé (1) pendant le processus de moulage de ces derniers (6, 7, 8).

17. Raccord (1) selon la revendication 15, dans lequel les moyens élastiques (27) comprennent un seul ressort qui s'étend le long de tous les éléments (6, 7, 8) du raccord (1) et qui est contraint par au moins deux éléments (6, 7, 8) dudit raccord (1).

18. Appareil électroménager comprenant, entre deux tubes (2, 4), un raccord articulé (1) selon l'une quelconque des revendications 1 à 17.

19. Appareil électroménager selon la revendication 18, **caractérisé en ce qu'**il s'agit d'un aspirateur.

20. Appareil électroménager selon la revendication 18, **caractérisé en ce qu'**il s'agit d'un balai électrique.
